# EUROPEAN PATENT APPLICATION

(11) **EP 2 554 046 A1**
(43) Date of publication of application: **06.02.2013**
(21) Application number: 12177344.4
(22) Date of filing: 20.07.2012
(51) Int. Cl.: A01K 1/015

(54) **Pet litter**

(30) Priority: 04.08.2011 IT VA20110024
(71) Applicant: Lamberti SPA, 21041 Albizzate (VA) (IT)
(72) Inventor: Paganini, Gianfranco, 20020 Magnago (MI) (IT); Di Modugno, Rocco, 20034 Giussano (MB) (IT); Chiavacci, Dario, 21040 Castronno (VA) (IT); Floridi, Giovanni, 28100 Novara (IT); Li Bassi, Giuseppe, 21026 Gavirate (VA) (IT)
(74) Representative: Giaroni, Paola

(57) **Abstract**

Clumping pet litters comprising ground corn cob coated with a mixture of high and low viscosity carboxymethylcellulose and process for their preparation.

## Description

### TECHNICAL FIELD

The present disclosure relates to animal litters and, in particular, to clumping pet litters based on ground corn cob and carboxymethylcellulose.

### BACKGROUND OF THE ART

Various substrates, such as clays and cellulose or lignin-based particulate materials, are used to absorb pet litters in domestic litter boxes.

Among pet litters, clumping litters are largely preferred, because they become sticky when wetted, thereby forming a "clump" that can be easily removed upon cleaning the box.

Clays have a natural tendency to clump when wetted, while a significant drawback of organic materials is that litters based on untreated organic materials lack the highly desirable clumping feature of clay litters.

On the other hand, organic based litters are highly desirable because of their low specific weight and because they can be easily disposed together with domestic compostable waste.

In the art, many attempts have been made to provide clumping organic based pet litters.

These organic based pet litters materials are generally composed of a substrate to which a coating of a different material is applied; the coating portion provides the clumping action.

This coating technology has been applied both to clays and to organic materials.

For example, US 5,970,916 teaches a litter material composed of a cellulosic substrate with a first layer of xanthan gum and a second layer of guar gum.

Also, US 2002/0038633 teaches a high viscosity-cellulose ether as a binder that is responsible for a clumping action in a litter partially composed of organic material.

The use of various gums, including guar gum and carboxymethylcellulose (CMC) is known in the manufacture of animal litters, and in particular in the manufacture of animal litters that contain organic materials.

US 5,664,523 describes a base litter material that includes both organic and inorganic components, but also includes 15-55% guar gum by weight.

US 6,053,125 teaches a clumpable cat litter formed of corncob grit and components that are coated with guar gum.

US 6,089,189 teaches a cellulose-based litter product consisting of a mixture of adhesive-treated cellulosic granules and a particulate polymeric clumping agent, preferably guar or locust bean gum.

It has now been found that clumping pet litters based on ground corn cob may be obtained by using a mixture of low and high viscosity carboxymethylcellulose as the coating clumping material.

The pet litter of the disclosure are coated with relevant amount of clumping material and do not contain residues of fine particulate clumping material. As a consequence they are non-dusting and very quickly provide durable strong clumps upon wetting.

### SUMMARY OF THE INVENTION

In one aspect, the disclosure relates to a process for preparing clumping pet litters comprising mixing 100 parts by weight of ground corn cob with: (A) from 1 to 10 parts by weight of carboxymethylcellulose having Brookfield(R) LVT viscosity at 20 rpm, 20°C and 25% by weight in water comprised between 1,000 and 6,000 mPa*s (LV CMC), (B) from 5 to 30 parts by weight of carboxymethylcellulose having Brookfield(R) LVT viscosity at 60 rpm, 20°C and 2% by weight in water comprised between 100 and 10,000 mPa*s (HV CMC), (C) from 3 to 30 parts by weight of water, the weight ratio of (B) to (A) being from 1:1 to 15:1. Accordingly, in another aspect, the disclosure relates to clumping pet litters obtainable from the above described process and comprising ground corn cob coated with from 5 to 31% by weight, based on the total weight of the corn cob and the coating, of a mixture of carboxymethylcellulose having Brookfield(R) LVT viscosity at 20 rpm, 20°C and 25% by weight in water comprised between 1,000 and 6,000 mPa*s (LV CMC) and of carboxymethylcellulose having Brookfield(R) LVT viscosity at 60 rpm, 20°C and 2% by weight in water comprised between 100 and 10,000 mPa*s (HV CMC), wherein the weight ratio of HV CMC to LV CMC ranges from 1:1 to 15:1 and the water content in the pet litter is from 2 to 22% by weight.

### DETAILED DESCRIPTION OF THE INVENTION

In the process for preparing clumping pet litters, the mixing is preferably performed at temperature comprised between 10 and 50°C, most preferably at room temperature.

The mixing usually takes from 1 to 6 hours, depending on the mixing apparatus and on the amount of materials, and is continued until a constant particles size distribution of the mixture is obtained, which means that all the carboxymethylcellulose is adhered onto the ground corn cob.

The ground corn cob useful for the preparation of the clumping pet litter of the present invention are corn cobs granules, preferably with particle size from 0,5 mm to 4 mm, most preferably from 1mm to 2 mm.

The mixing shall be carried gently, i.e. the mixing conditions shall be chosen in order not reduce the particle size of the starting ground corn cob.

As a result, the pet litter is non dusty, i.e. not more than 1 % of its weight passes through a 35 mesh ASTM sieve (0.5 mm).

The characterizing feature of the process of the present disclosure is the use of carboxymethylcellulose having Brookfield(R) LVT viscosity at 20 rpm, 20°C and 25% by weight in water comprised between 1,000 and 6,000 mPa*s (LV CMC) as part of the clumping coating material.

The LV CMC, when used in combination with carboxymethylcellulose having Brookfield(R) LVT viscosity at 60 rpm, 20°C and 2% by weight in water comprised between 100 and 10,000 mPa*s (HV CMC), in the above detailed proportion, allows the preparation of granular clumping pet litters from corn cob by a process that advantageously takes place at ambient temperature, without the necessity of a heating step.

It has been found that the presence of LV CMC in the process is essential for achieving the complete and stable coating of the corn cob granules, which is evidenced by the recovering of a non-dusting granular product devoid of fine particles.

Indeed, the HV CMC, which is mainly responsible for the clumping, is added in the process as a powder, with particle size below 0,5 mm, and the low amount of water involved in the process is not sufficient to dissolve it completely: should the coating process be incomplete, part of the HV CMC would still be present in the final product, even after prolonged mixing.

Thus, one of the advantages of the process is the obtainment of a clumping pet litter having particle size above 0.5 mm, which is entirely not prone to dusting, clumps very quickly and is able to absorb large amounts of aqueous fluids, without the need of a drying step and, preferably, operating in one single mixing apparatus

The utilizable mixing apparatus may be a drum coating device, such as a cement mixer or a horizontal coating drum, an auger mixer, a fluid bed mixer, a spray tower, a vibrating bed mixer, or other similar device known to those skilled in the coating arts. The use of a horizontal coating drum is presently preferred. Also, both batch and continuous feed systems may be used. Batch systems are currently preferred.

Preferably, the process for preparing clumping pet litters of the disclosure comprises mixing 100 parts by weight of ground corn cob with: (A) from 1 to 8 parts by weight of carboxymethylcellulose having Brookfield(R) LVT viscosity at 20 rpm, 20°C and 25% by weight comprised between 1,000 and 6,000 mPa*s (LV CMC), (B) from 8 to 25 parts by weight of carboxymethyl cellulose having Brookfield(R) LVT viscosity at 60 rpm, 20°C and 2% by weight comprised between 100 and 10,000 mPa*s (HV CMC), (C) from 5 to 25 parts by weight of water, the weight ratio of (B) to (A) being from 2:1 to 10:1.

Most preferably, the minimum amount of water to be used in the process is the amount which is capable of dissolving the LV CMC, because the LV CMC is preferably used already dissolved in water, most preferably as a 30 to 40% by weight aqueous solution.

Commercially available LV CMC solutions may be used in the process. The preferred LV CMC for use in the process has a degree of substitution (DS) comprised between 0.4 and 1.2, Brookfield(R) LVT viscosity at 20 rpm, 20°C and 25% by weight in water comprised between 3,000 and 4,000 mPa*s

The HV CMC has a degree of substitution (DS) comprised between 0.4 and 1.2 and preferably a Brookfield(R) LVT viscosity comprised between 100 and 2,000 mPa*s at 2 wt% in water and 60 rpm.

Preferably, in the process of the invention (A), (B) and (C) are added onto the ground corn cob while stirring. The order in which (A), (B) and (C) are added is not relevant.

However, according to a particular embodiment of the invention, the process advantageously comprises mixing the ground corn cob with the HV CMC and adding to the obtained dry mixture the LV CMC which has been dissolved in the water, while stirring.

A spray apparatus may be used to add the LV CMC onto the dry mix. According to another preferred embodiment of the invention, the process advantageously comprises mixing the ground corn cob with (A), (B) and (C) with the following procedure: i. the ground corn cob is dry mixed with from 1/3 to ½ of the HV CMC, ii. 1/3 to ½ of the LV CMC dissolved in part of the water is added to the obtained dry mixture and the mixture is stirred, iii. the remaining HV CMC is added to the obtained mixture and stirried, iv. the remaining LV CMC dissolved in the remaining water is added and stirred.

The pet litter of the disclosure, beside being non- dusty, clumps very quickly and is able to absorb large amounts of aqueous fluids.

The clumping speed and ability to absorb aqueous fluids are important parameters for determining pet litter quality, because they affect the percolation of aqueous fluids through the litter box and reduce the amount of agglomerated litter which is to be removed upon cleaning. The pet litter formed according to the preferred embodiment of the invention is made entirely from non-toxic products and is fully biodegradable. It may thus be disposed of in any conventional and convenient manner without concern about harming the environment. Alternatively , the pet litter may be composted.

The following examples are included to demonstrate preferred embodiments of the invention.

### EXAMPLES

Clumping pet litters are prepared with the ingredients reported in Table 1 in parts by weight (pbw).

The HV CMC of the Examples has DS 0.8 and Brookfield® viscosity of 300 mPa*s, at 2% in water and 25°C, 60 rpm.

The LV CMC of the Examples is used as a 33% by weight aqueous solution and has DS 0.8 and Brookfield® viscosity of 3,100 mPa*s at 25 %wt in water, 25°C and 20 rpm.

The ground corn cob of the Examples has particle size between 1 and 2 mm.

### Procedure

### The ground corn cob is charged in a homogenizer.

Half of the HV CMC is added and stirring is started.

Half of the LV-CMC is added and stirring is continued for about 1 hour, until all the powder disappears (i.e. less than 1% by weight passes through a 35 ASTM mesh sieve). The remaining HV-CMC, LV-CMC and, possibly, water are added, while stirring. Stirring is continued for about 1 hour.

**Table 1 - Pet litters ingredients (pbw)**

| | Ground corn cob | HV CMC | LV CMC¹⁾ | Water |
|---|---|---|---|---|
| Example 1 | 100 | 20 | 6 | 10 |
| Example 2 | 100 | 10 | 15 | - |
| Example 3 | 100 | 13 | 9 | 5 |
| Example 4 | 100 | 13 | 9 | - |
| Example 5 | 100 | 20 | 15 | - |
| Example 6 | 100 | 20 | 15 | 10 |
| Example 7 | 100 | 20 | 15 | 5 |
| Example 8²⁾ | 100 | 20 | 0 | 15 |

| | | | | |
|---|---|---|---|---|
| 1) 33 wt% aqueous solution 2) comparative | | | | |

### Application tests

Appearance.

A visual evaluation of the presence of powder in the pet litter is made.

### Results:

Uniform = no presence of powder
Dusty = presence of powder

### Cohesion.

The cohesion of the agglomerated pet litter after use is measured with the following method. Put in a glass jar 100 g of pet litter and add the same quantity of water. Wait for 30 seconds and remove the agglomerated pet litter from the glass jar. Let the agglomerated pet litter fall from 50 cm on a smooth and hard work surface. The loss of particles after the impact is visually checked.

Results:
Excellent = no loss of particles
Good = low loss of particles
Insufficient = high loss of particles

### Absorption.

The time required by the pet litter to absorb an equivalent mass of water.

### Results:

Fast = water is absorbed in less than 10 seconds
Good = water is absorbed in less than 30 seconds
Slow = water absorbed in more than 30 seconds

### Percolation.

It is an index of the liquid that can pass through a pet litter layer.

A pet litter layer of 4cm is put on a sieve (45mm) and then 20 ml of water are poured onto the cat litter. The water that is collected under the sieve is weighed.

### Results:

Low = no water is collected
Medium = less than 4ml water are collected
High = more than 4 ml water are collected

The results of the application test are reported in Table 2.

**Table 2 - Application tests**

| | **Appearance** | **Cohesion** | **Absorption** | **Percolation** |
|---|---|---|---|---|
| Example 1 | Uniform | Good | Fast | Medium |
| Example 2 | Uniform | Good | Fast | Medium |
| Example 3 | Uniform | Good | Fast | Medium |
| Example 4 | Uniform | Good | Fast | Medium |
| Example 5 | Uniform | Excellent | Fast | Medium |
| Example 6 | Uniform | Excellent | Fast | Low |
| Example 7 | Uniform | Excellent | Fast | Low |
| Example 8¹⁾ | Dusty | Insufficient | Fast | High |

| | | | | |
|---|---|---|---|---|
| 1) comparative | | | | |

## Claims

1. Process for preparing clumping pet litters comprising mixing 100 parts by weight of ground corn cob with: (A) from 1 to 10 parts by weight of carboxymethylcellulose having Brookfield(R) LVT viscosity at 20 rpm, 20°C and 25% by weight in water comprised between 1,000 and 6,000 mPa*s (LV CMC), (B) from 5 to 30 parts by weight of carboxymethylcellulose having Brookfield(R) LVT viscosity at 60 rpm, 20°C and 2% by weight in water comprised between 100 and 10,000 mPa*s (HV CMC), (C) from 3 to 30 parts by weight of water, the weight ratio of (B) to (A) being from 1:1 to 15:1.

2. Process for preparing clumping pet litters according to claim 1. comprising mixing 100 parts by weight of ground corn cob with: (A) from 1 to 8 parts by weight of LV CMC, (B) from 8 to 25 parts by weight of HV CMC, (C) from 5 to 25 parts by weight of water, the weight ratio of (B) to (A) being from 2:1 to 10:1.

3. Process for preparing clumping pet litters according to claim 1. or 2. in which the LV CMC has Brookfield(R) LVT viscosity at 20 rpm, 20°C and 25% by weight in water comprised between 3,000 and 4,000 mPa*s and the HV CMC has Brookfield(R) LVT viscosity at 60 rpm, 20°C and 2 wt% in water comprised between 100 and 2,000 mPa*s.

4. Process for preparing clumping pet litters according to any of claims from 1 to 3. in which the ground corn cob has particle size between 0.5 mm and 4 mm.

5. Process for preparing clumping pet litters according to claim 4. in which the ground corn cob has particle size between 1 mm and 2 mm.

6. Process for preparing clumping pet litters according to claim 5. comprising mixing the ground corn cob with the LV CMC, the HV CMC and the water at temperature comprised between 10 and 50°C for from 1 to 6 hours.

7. Process for preparing clumping pet litters according to claim 6. comprising mixing the ground corn cob with the HV CMC and adding to the obtained dry mixture the LV CMC, which has been previously dissolved in the water.

8. Process for preparing clumping pet litters according to claim 6. comprising mixing the ground corn cob with (A), (B) and (C) with the following procedure: i. the ground corn cob is dry mixed with from 1/3 to ½ of the HV CMC, ii. 1/3 to ½ of the LV CMC dissolved in part of the water is added to the obtained dry mixture and the mixture is stirred, iii. the remaining HV CMC is added to the obtained mixture and stirried, iv. the remaining LV CMC, dissolved in the remaining water, is added and stirred.

9. Clumping pet litters comprising ground corn cob coated with from 5 to 31 % by weight, based on the total weight of the corn cob and the coating, of a mixture of carboxymethylcellulose having Brookfield(R) LVT viscosity at 20 rpm, 20°C and 25% by weight in water comprised between 1,000 and 6,000 mPa*s (LV CMC) and of carboxymethylcellulose having Brookfield(R) LVT viscosity at 60 rpm, 20°C and 2% by weight in water comprised between 100 and 10,000 mPa*s (HV CMC), wherein the weight ratio of HV CMC to LV CMC ranges from 1:1 to 15:1 and the water content in the pet litter is from 2 to 22% by weight.

10. Clumping pet litter according to claim 9. that passes for not more than 1% of its weight through a 35 mesh ASTM sieve.
